Europäisches Patentamt

European Patent Office

Office européen des brevets

(19)

(11) Veröffentlichungsnummer: **0 186 024**
**A2**

(12) # EUROPÄISCHE PATENTANMELDUNG

(21) Anmeldenummer: 85115625.7

(22) Anmeldetag: 09.12.85

(51) Int. Cl.⁴: **B 29 C 45/07**

(30) Priorität: 28.12.84 DE 3447707

(43) Veröffentlichungstag der Anmeldung:
02.07.86 Patentblatt 86/27

(84) Benannte Vertragsstaaten:
AT CH DE FR GB IT LI NL

(71) Anmelder: Hehl, Karl
Arthur-Hehl-Strasse 32
D-7298 Lossburg-1(DE)

(72) Erfinder: Hehl, Karl
Arthur-Hehl-Strasse 32
- D-7298 Lossburg-1(DE)

(74) Vertreter: Mayer, Friedrich Dr. et al,
Westliche 24
D-7530 Pforzheim(DE)

(54) Spritzgiesseinheit für eine Kunststoff-Spritzgiessmaschine.

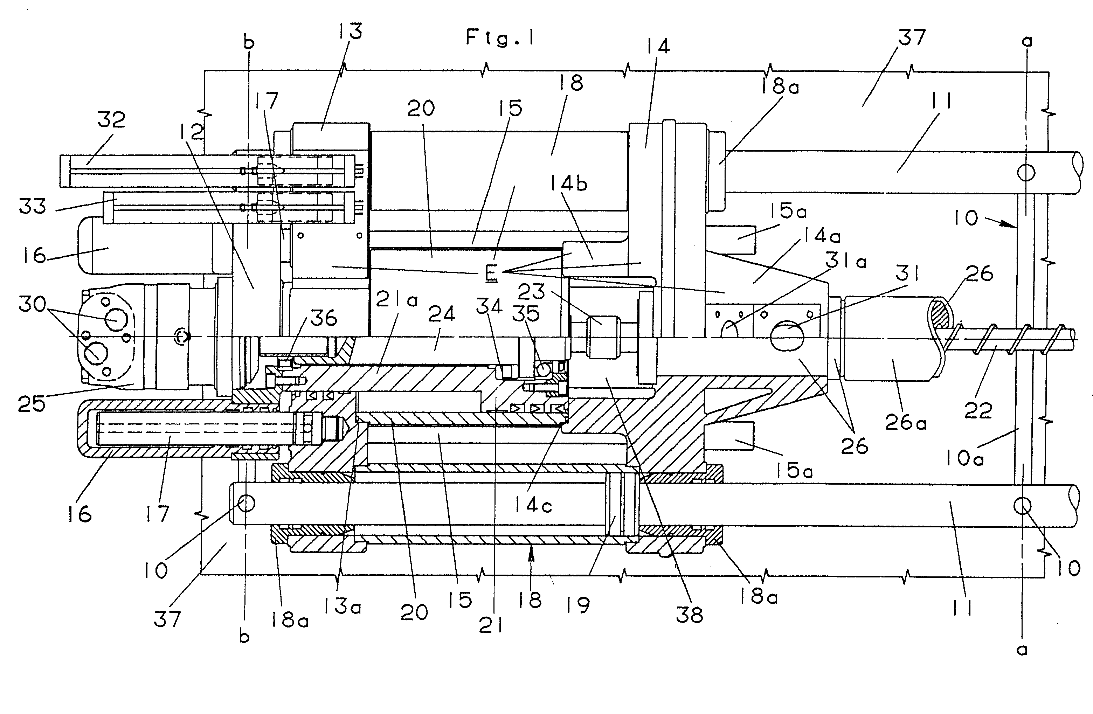

(57) Die Spritzgießeinheit mit auf stationären Säulen (11)
verfahrbaren Trägerbrücken (13, 14) für Plastifizierzylinder
(26) und Förderschnecke (22) sowie mit einem zentralen
Einspritzzylinder (20, 21) und hierzu diametralen Fahrzylindern (18, 19) ist mit einer Einrichtung (Drehsicherung) und
diametralen Abstützlagern zur Sicherung des Rotationsmotors gegen Drehung versehen. Als Abstützlager finden die
Mantelflächen der Tauchkolben (17) zweier Dekompressionszylinder (16, 17) Verwendung. Die Tauchkolben (17) sind in
einer benachbarten Trägerbrücke (13) für die Förderschnecke
(22) verankert, die mit der Trägerbrücke (14) eine bauliche
Einheit (E) bildet. Dadurch sind die Säulen (11) weitgehend
von den rhythmischen Biegebeanspruchungen der Drehsicherung befreit (Fig. 1).

Fig.1

PATENTANWÄLTE
DR. FRIEDRICH E. MAYER
DIPL.-PHYS. G. FRANK
WESTLICHE 24
7530 PFORZHEIM

Spritzgießeinheit für eine Kunststoff-Spritzgießmaschine

Die Erfindung bezieht sich auf eine Spritzgießeinheit entsprechend dem Oberbegriff des Patentanspruches 1.

Bei einer bekannten Spritzgießeinheit dieser Art (DE-OS 20 20 337) ist der Rotationsmotor zwecks Drehsicherung auf einer gesonderten Trägerbrücke gelagert, die auf den stationären Säulen verschiebbar ist. Demzufolge muß der Abstand zwischen den vorderen und rückseitigen Abstützpunkten der Säulen so groß sein, daß der Vorwärts- bzw. Rückwärtshub der Fahrzylinder und zusätzlich ein Dekompressionshub bei der von der Spritzgießform abgesetzten Spritzgießeinheit möglich ist. Unter diesen Voraussetzungen sind rhythmische Durchbiegungen der Säulen bei den Spritzzyklen unvermeidlich, weil die Spritzgießeinheit nach Absetzen der Spritzgießform einen relativ großen Abstand von den Abstützpunkten der Säulen aufweist. Es hat sich gezeigt, daß bei intensiver Benutzung solcher Spritzgießeinheiten über lange Zeiträume die Führungsgenauigkeit nachläßt. Dies wirkt sich besonders nachteilig aus, wenn die Düse an der Bildung des Formhohlraumes der Spritzgießform teilhat.

Bei einer anderen bekannten Spritzgießeinheit der gattungsgemäßen Art (DE-OS 23 02 211) sind als Abstützlager der Drehsicherung Rippen an den Zylindern der Fahrzylinder vorgesehen, welche Laufbahnen für Laufrollen des Rotationsmotors bilden. Bei Betätigung der Dekompressionszylinder fahren die Laufrollen auf den dadurch erheblich belasteten Laufbahnen der Rippen. Andererseits sind die Säulen wegen ihres mehrteiligen Aufbaues zur Abstützung auf dem Maschinenfuß weder bestimmt noch geeignet. Daher ist eine Spritzgießeinheit dieser Art im Hinblick auf die unvermeidlichen Biegebeanspruchungen der Säulen und Führungszylinder nur in kleinerer Ausführung möglich.

Der Erfindung liegt die Aufgabe zugrunde, die gattungsgemäße Spritzgießeinheit derart weiterzubilden, daß die Säulen bzw. Fahrzylinder weitgehend von den rhythmischen Biege- bzw. Torsionsbeanspruchungen der ihre Abstützlager rhythmisch belastenden Drehsicherung für den Rotationsmotor befreit sind.

Diese Aufgabe wird erfindungsgemäß durch die im Kennzeichen des Patentanspruches 1 genannten Merkmale gelöst.

Bei einer solchen Ausbildung sind die vom Drehwiderstand des Rotationsmotors belasteten Abstützlager unmittelbar an der die Trägerbrücken von Plastifizierzylinder und Förderschnecke umfassenden baulichen Einheit angeordnet, die ihrerseits über die Zylinderdeckel der Fahrzylinder auf den Säulen verfahrbar ist. Zudem können die Säulen kürzer bemessen sein, weil keine Säulenabschnitte mehr für die Abstützlager der Drehsicherung erforderlich sind (vergl. DE-OS 20 20 33). Aus diesem Grunde ist es auch möglich, die Abstützpunkte von rückseitigen Stützelementen zur Abstützung der Säulen auf dem Maschinenfuß den vorderen Abstützungen anzunähern und dadurch die Biegebelastung der Säulen zu verringern.
Eine weitere Verminderung der Durchbiegungen der Säulen ergibt sich durch gewichtsvermindernde Maßnahmen entsprechend den Patentansprüchen 6 bis 8.

Nachstehend wird die Erfindung anhand der Zeichnung an einem Ausführungsbeispiel erläutert.

Es zeigen:

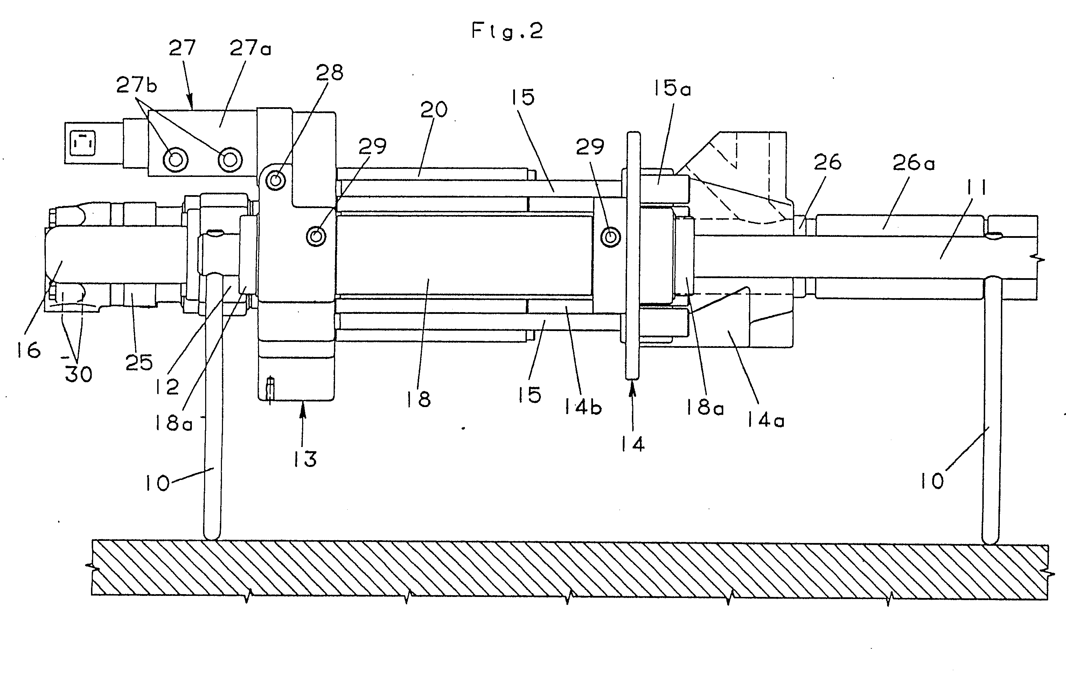

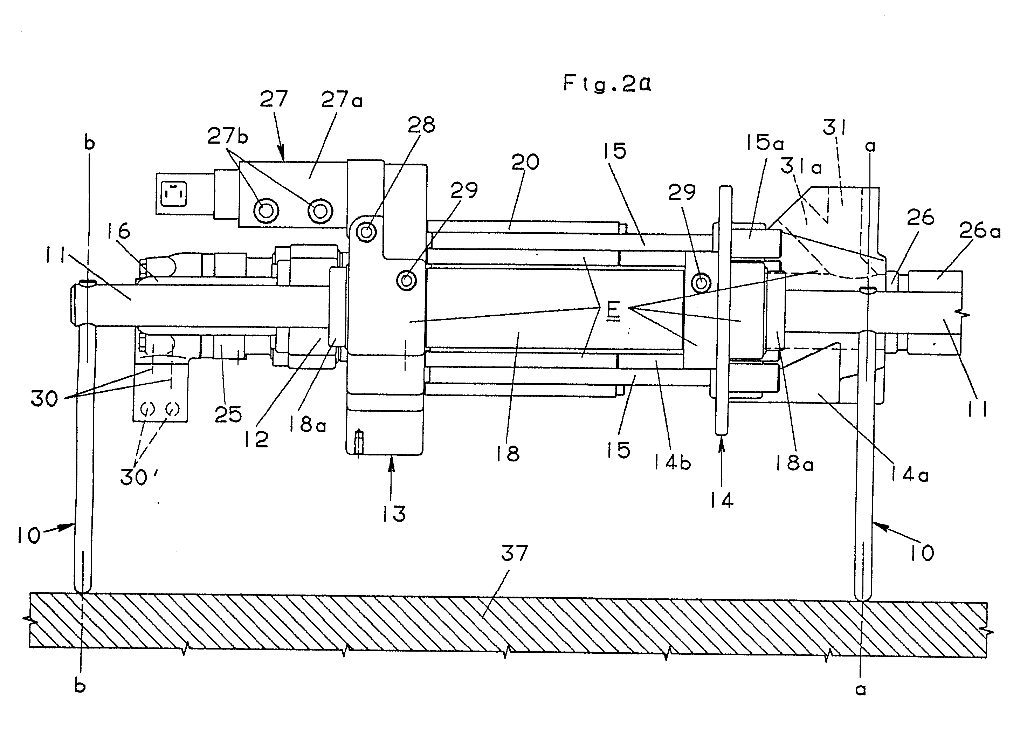

Fig. 1,2        Die maximal von der Spritzgießform abgesetzte Spritzgießeinheit bei nicht vollzogenem Dekompressionshub in Draufsicht und Seitenansicht,

Fig. 2a         die auf die Spritzgießform aufgesetzte Spritzgießeinheit in einer Darstellung gemäß Fig. 2,

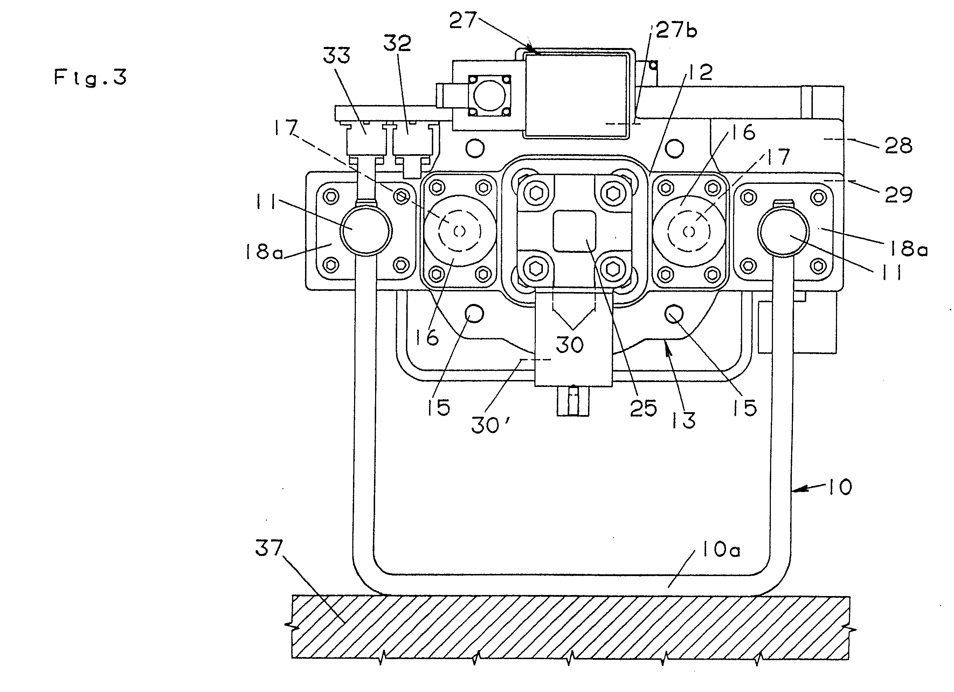

Fig. 3          die Spritzgießeinheit in Rückansicht.

Die Spritzgießeinheit umfaßt eine auf Säulen 11 verschiebbare Trägerbrücke 14 für den mit Förderschnecke 22 und Heizmanschetten 26 a ausgerüsteten Plastifizierzylinder 26. Die Säulen 11 sind vorne am stationären Formträger der Kunststoff-Spritzgießmaschine axial festgelegt. Der Plastifizierzylinder 26 ist in einer zentralen Bohrung der Trägerbrücke 14 aufgenommen, die dank einer sich nach vorne erstreckenden Anformung 14a mit Einfallöffnungen 31, 31a für das Kunststoffmaterial axial verlängert ist. Die Spritzgießeinheit weist ferner einen in der Spritzachse liegenden, einseitig beaufschlagbaren hydraulischen Einspritzzylinder 20, 21 für den Einspritzhub der Förderschnecke 22 auf. Der Zylinder 20 dieses Einspritzzylinders ist in entsprechenden Ringschultern 14c von diametral zur Spritzachse liegenden Ausformungen 14b zentriert, die einen vertikalen Schacht 38 in der Trägerbrücke 14 begrenzen. Rückseitig ist der Zylinder 20 in einer weiteren Trägerbrücke 13 an Ringschultern 13a zentriert. Durch diese Trägerbrücke 13 ist die rotierbare und axial verschiebbare Förderschnecke 22 rückseitig abgestützt. Zwei hydraulische Fahrzylinder 20, 21 zum Verfahren der Spritzgießeinheit auf den Säulen 11 beim Aufsetzen bzw. Absetzen auf die Spritzgießform sind diametral zum Einspritzzylinder 20, 21 und koaxial zu den Säulen 11 angeordnet.

Die Fahrkolben 19 sitzen auf den Säulen 11 fest auf. Die Achsen der Zylinder 18 und des Zylinders 20 liegen in einer horizontalen Ebene. Außerdem sind Dekompressionszylinder 16, 17 für einen Rückhub der Förderschnecke 22 vorgesehen. Durch einen solchen Rückhub kann das plastische Kunststoffmaterial im Plastifizierzylinder vom Überdruck befreit werden, so daß auch eine Spritzgießeinheit mit verschlußfreier Düse zwecks thermischer Trennung von der Spritzgießform abgesetzt werden kann, ohne daß Kunststoffmaterial aus der Düse austritt. Die Förderschnecke 22 bildet mit ihrem koaxialen Rotationsmotor 25, mit den Kolben 21 des Einspritzzylinders 20, 21 und mit den Zylindern 16 der Dekompressionszylinder 16, 17 eine axiale Bewegungseinheit. Die Zylinder 20, 18 von Einspritzzylinder 20, 21 und Fahrzylindern 18, 19 bilden mit den Trägerbrücken 13, 14 eine bauliche Einheit E. Diese Einheit E ist über die Zylinderdeckel 18a der Fahrzylinder 18, 19 auf den Säulen 11 verschiebbar gelagert. Zwei Dekompressionszylinder 16, 17 mit Tauchkolben 17 sind diametral zum Rotationsmotor 25 angeordnet. Die Tauchkolben 17 sind mit der baulichen Einheit E starr verbunden. Die Zylinder 16 der Dekompressionszylinder 16 sind mit dem Rotationsmotor 25 starr verbunden. Zu diesem Zweck sind sie in einem Flansch 12 des Rotationsmotors 25 verankert. Die Tauchkolben 17 sind mit einem vorderseitigen Gewindeabschnitt in die benachbarte Trägerbrücke 13 eingeschraubt. Der Rotationsmotor 25 mit den Anschlüssen 30 ist über die den Kolben 21 mit Kolbenstange 21a durchsetzende Spindel 24 mittels Kupplung 23 mit der Förderschnecke 22 verbunden. Der Einspritzdruck des Kolbens 21 wird über ein Axialdrucklager 34 auf die Spindel 24 und damit auf die Förderschnecke 22 übertragen. Das Axialdrucklager liegt an einem Radialflansch der Spindel 24 an.

Eine Rückdrehsperre 36 verhindert eine unerwünschte Drehbewegung der Förderschnecke 22 beim Einspritzhub. Die beien Trägerbrücken 13, 14 sind mittels Zugstangen 15 mit Anzugsmuttern 15a miteinander

verspannt und durch die Zylinder 18, 20 im Abstand voneinander gehalten. Die Zylinder 18, 20 sind durch Hülsen aus Stahl,die Trägerbrücken 13, 14 aus Gußeisen gebildet. Die lichte Weite des Zylinders 20 des Verschiebezylinders 20, 21 ist etwa viermal so groß wie die lichte Weite der Zylinder 16 der Dekompressionszylinder 16, 17. Die Kupplung 23 zwischen Spindel 20 und Förderschnecke 22 ist über den Schacht 38 zugänglich.Wegmeßsysteme 32 und 33 sind Bestandteile des Steuerungssystems. Bei der Vorplastifizierung weicht die aus der rotierenden Förderschnecke 22, der Spindel 24, dem Rotationsmotor 25 und den Zylindern 16 mit Flansch 12 bestehende axiale Bewegungseinheit unter dem Staudruck des vorplastifizierten Materials bei aufgesetzter Düse zurück. Dabei wird Öl in die sich vergrößernden Zylinderräume der Dekompressionszylinder 16, 17 eingesaugt. Der maximale Hub der Zylinder 16 entspricht notwendigerweise dem maximalen Hub des Kolbens 21 des Einspritzzylinders.

Der gegenseitige Abstand der Abstützpunkte in den Ebenen a-a und b-b der Säulen entspricht etwa der doppelten Länge der Fahrzylinder 18, 19. Als Stützorgane sind U-förmige Auflagekufen 10 vorgesehen, deren auf dem Maschinenfuß 37 aufliegende U-Stege quer zur Spritzachse verlaufen.

Patentansprüche

1. Spritzgießeinheit für eine Kunststoff-Spritzgießmaschine mit einer auf Säulen (11) verfahrbaren Trägerbrücke (14) für einen mit einer Förderschnecke (22) ausgerüsteten Plastifizierzylinder (26),

mit einem in der Spritzachse liegenden hydraulischen Einspritzzylinder (20,21) für den Einspritzhub der Förderschnecke (22 ) und mit zwei zu den Säulen (11) koaxialen hydraulischen Fahrzylindern (18,19) zum Verfahren der Spritzgießeinheit, deren Fahrkolben (19) fest auf stationären Säulen (11) aufsitzen,

sowie mit wenigstens einem hydraulischen Dekompressionszylinder (16,17) für einen das Kunststoffmaterial im Plastifizierzylinder (26) vom Überdruck befreienden Rückhub der Förderschnecke (22), die mit ihrem koaxialen Rotationsmotor, mit dem Kolben (21) des Einspritzzylinders (20,21 ) und mit dem bewegten Teil des Dekompresionszylinders (16,17) eine axiale Bewegungseinheit bildet,

und mit einer Einrichtung ( Drehsicherung) zur Sicherung des Rotationsmotors (25) gegen Drehung, welche Einrichtung Abstützlagerumfaßt, die diametral zum Rotationsmotor (25) angeordnet sind,

dadurch gekennzeichnet, daß  als Abstützlager der Drehsicherung die Mantelflächen der Tauchkolben (17) zweier Dekompressionszylinder (16,17) Verwendung finden, welche Tauchkolben in einer gesonderten die Förderschnecke (22) rückseitig abstützenden Trägerbrücke (13) verankert sind, die mit der Trägerbrücke (14) für den Plastifizierzylinder (26) und den Zylindern (18,20) der Fahrzylinder (18,19) und des Einspritzzylinders (20,21) eine bauliche Einheit (E) bilden.

2. Spritzgießeinheit nach Patentanspruch 1, dadurch gekennzeich - net, daß die Tauchzylinder (17) der Dekompressionszylinder

(16,17) in einem Flansch (12) des Rotationsmotors (25) verankert sind.

3. Spritzgießeinheit nach Patentanspruch 1 oder 2, dadurch
gekennzeichnet, daß die Tauchkolben (17) mit einem vorderseitigten Gewindeabschnitt die Trägerbrücke (13) für die
Förderschnecke (22) eingeschraubt sind.

4. Spritzgießeinheit nach einem der vorhergehenden Patentansprüche, dadurch gekennzeichnet, daß eine auf den Maschinenfuß (37) aufliegende Auflagekufe (10) in einer senkrecht zur
Spritzachse stehenden Ebene (b-b) an den freien Enden der
Säulen (11) angreifen und daß die Tauchkolben (17) bei maximaler Absetzung der Spritzgießeinheit von der Spritzgießform
die Auflagekufe (10) nach hinten überragen (Fig. 1,2) und
sich bei auf die Spritzgießform aufgesetzter Spritzgießeinheit vor der Auflagekufe befinden (Fig.2a).

5. Spritzgießeinheit nach einem der vorhergehenden Patentansprüche, dadurch gekennzeichnet, daß die Säulen (11) von einer
weiteren Auflagekufe (10') abgestützt sind, die in einer zur
Ebene (b-b) der Auflagekufe (10) parallelen Ebene (a-a)
liegen und sich in einem Abstand von der Auflagekufe (10) befindet, welcher der doppelten Länge des Hubes der Fahrzylinder
(18,19) entspricht.

6. Spritzgießeinheit nach einem der vorhergehenden Patentansprüche, dadurch gekennzeichnet, daß die über die Zylinderdeckel
(18a) der Fahrzylinder (18) auf den Säulen (11) verschiebbare
bauliche Einheit (E) zwei mittels Zugstangen (15) miteinander
verspannbare Trägerbrücken (13,14) umfaßt, die gegeneinander
durch die Zylinder (18) der Fahrzylinder (18,19) und durch den
Zylinder (20) des Verschiebezylinders (20,21) im Abstand
voneinander gehalten und gegeneinander abgestützt sind.

0186024

7. Spritzgießeinheit nach einem der vorhergehenden Patentansprüche, dadurch gekennzeichnet, daß die Zylinder (18,20) von Fahrzylinder (18,19) und Verschiebezylinder (20,21) durch an den Trägerbrücken (13,14) zentrierte Hülsen gebildet sind.

8. Spritzgießeinheit nach Patentanspruch 6 oder 7, dadurch gekennzeichnet, daß die die Zylinder (18,20) bildenden Hülsen aus Stahl und die Trägerbrücken (13,14) aus Gußeisen sind.

9. Spritzgießeinheit nach einem der vorhergehenden Patentansprüche, dadurch gekennzeichnet, daß die lichte Weite des Zylinders (20) des Einspritzzylinders etwa viermal so groß ist wie die lichte Weite der Zylinder (16) der Dekompressionszylinder (16,17).

10. Spritzgießeinheit nach einem der vorhergehenden Patentansprüche, dadurch gekennzeichnet, daß sich die zylindrischen Abstützlager an den Tauchkolben (17) bei maximaler Absetzung der Spritzgießeinheit von der Spritzgießform und bei nicht vollzogenem Dekompressionshub etwa in einer Ebene (b-b), in welcher die Auflagekufe (10) an den Enden der Säulen angreift.

0186024

Fig.1

Fig.2

0186024

Fig.2a

0186024

Fig.3

0186024